# EUROPEAN PATENT SPECIFICATION

(11) **EP 0 468 465 B1**
(45) Date of publication and mention of the grant of the patent: **01.10.1997**
(21) Application number: 91112356.0
(22) Date of filing: 23.07.1991
(51) Int. Cl.: G03G 9/09, C09D 11/00

(54) **Near infrared ray-decolorizable printing ink and electrophotographic toner**
Im nahen Infrarot entfärbende Drucktinte und elektrophotographischer Toner
Encre d'impression et toner électrophotographique décolorisables dans l'infrarouge proche

(30) Priority: 23.07.1990 JP 194187/90
(43) Date of publication of application: 29.01.1992
(73) Proprietor: SHOWA DENKO KABUSHIKI KAISHA, Minato-ku, Tokyo (JP)
(72) Inventor: Murofushi, Katsumi, c/o Showa Denko K.K., Kawasaki-ku, Kawasaki-shi, Kanagawa (JP); Hosoda, Yoshikazu, c/o Showa Denko K.K., Kawasaki-ku, Kawasaki-shi, Kanagawa (JP); Gan, Yoke Ai, c/o Showa Denko K.K., Kawasaki-ku, Kawasaki-shi, Kanagawa (JP); Kondo, Kunio, c/o Showa Denko K.K., Kawasaki-ku, Kawasaki-shi, Kanagawa (JP)
(74) Representative: Strehl Schübel-Hopf Groening & Partner

(56) References cited:
- EP-A- 0 040 977
- EP-A- 0 223 587
- EP-A- 0 305 054
- EP-A- 0 379 157
- PATENT ABSTRACTS OF JAPAN vol. 14, no. 191 (P-1038)(4134) 18 April 1990 & JP-A-02 037 364 ( MITA IND CO LTD ) 7 February 1990

## Description

### BACKGROUND OF THE INVENTION

### (1) Field of the Invention

The present invention relates to an electrophotographic toner and a printing ink containing a near infrared ray-decolorizable recording material and a sensitizer.

### (2) Description of the Related Art

Conventionally, in the fields of, for example, printing and copying, the storability of a recording material, in terms of environmental resistance, e.g., light resistance, moisture resistance, resistance to solvent, and thermal resistance, has become increasingly important, and thus many attempts have been made to improve the physical properties of dyes and pigments. Particularly, many developments have been made in the fields of electrophotographic recording, electrostatic recording, and thermal transfer-ink recording. Recently, due to the increasing amount of information available, a repeated printing has been required, and photochromic materials and thermochromic materials have been developed as recording materials for multiple recording systems or rewritable recording materials (see, for example, Japanese Unexamined Patent Publication (Kokai) No. 60-155179, Japanese Unexamined Patent Publication (Kokai) No. 50-75991, and Japanese Unexamined Patent Publication (Kokai) No. 50-10555).

Japanese Unexamined Patent Publication (Kokai) No. 60-155179 discloses fluide compounds which appear blue under ultraviolet rays and are transparent under a white light, and Japanese Unexamined Patent Publication (Kokai) No. 50-75991 discloses a thermally discoloring material comprising a coupler consisting mainly of a leuco-dye, and a phenolic hydroxy group-containing compound as a developer. These rewritable recording materials, however, are reversibly decolored and colored or subjected to color changes by visible light or ultraviolet rays, and further, have problems in terms of storage stability under visible light and durability to repeated recording.

A photohardenable composition comprising a free radical addition polymerizable or crosslinkable compound and an ionic dye-counter ion compound is disclosed in EP-A 0 223 587. Said ionic dye-counter ion compound is capable of absorbing actinic radiation and producing free radicals which initiate free radical polymerization or crosslinking of said compound. Among the ionic dye-counter ion compound also cationic dye-borate anion compounds may be used.

EP-A 0 040 977 relates to light-sensitive imaging systems comprising tetra(aliphatic)borates, which have been found to be considerably faster than their aromatic counter parts.

A similar light-sensitive composition comprising (a) an aromatic diazo compound and (b) a cationic dye/borate anion complex, which composition may further comprise a radically polymerizable unsaturated compound is disclosed in EP-A 0 379 157 which is prior art under Art. 54(3) and (4) EPC for the Contracting States DE, FR, GB and NL.

EP-A 0 305 054 relates to an IR-ray absorptive compound and an optical recording medium such as an optical disk or card using the IR-ray absorptive compound.

Further, many similar studies have been made in the fields of electrophotographic recording and electrostatic recording, as well as in the fields of printing inks and inks for printers, and many electrophotographic printing methods are known, for example, as disclosed in U.S. Patent No. 2297691, Japanese Examined Patent Publication (Kokoku) No. 42-23910, and Japanese Examined Patent Publication (Kokoku) No. 43-24748. In general, an electric latent image is formed on a sensitized material, utilizing a photoconductive substance in many ways, the latent image is developed with a toner to form a visible image, and optionally, after the toner image is transferred to a material such as paper, the image is fixed by the application of heat and pressure to obtain a copy. Furthermore, various developing processes wherein an electrostatic image is obtained by using a toner are known. For example, various developing processes, such as the magnetic brush process disclosed in U.S.Patent No. 2874063, the cascade developing process disclosed in U.S. Patent No. 2618552, the powder-cloud process disclosed in U.S. Patent No. 2221776, the fur brush developing process, and the liquid developing process, etc. are known. Various magnetically recording processes wherein a magnetic latent image is formed and then developed with a magnetic toner are also known. The toner image when developed is optionally transferred to a material such as paper, and then fixed. As processes for developing the toner image, a process wherein the toner is heated and melted by a heater or heated roller, to be fused to a base material and followed by solidification, a process wherein the binder resin of the toner is softened or dissolved with an organic solvent to be fixed on a base material, and a process wherein the toner is fixed on a base material by the application of pressure are known.

The toners used in the fixing process using heating rollers as described above are generally prepared by melt mixing and uniformly dispersing a colorant such as carbon black, and additives such as an electric charge regulator, in a thermoplastic resin such as a styrene-butyl acrylate copolymer, allowing the mixture to cool, and then finely pulverizing the solidified product into a desired particle diameter by a pulverizer or dispersing machine. Furthermore, currently a coloration is under development in the printing and copying fields, and an improvement of the physical properties of colorants and electric charge regulator is widely sought (see, for example, Japanese Unexamined patent publication (Kokai) No. 57-130046 and Japanese Unexamined patent publication (Kokai) No. 57-191650).

Many printing processes, such as off-set press printing, letterpress printing, gravure printing, transfer press printing, or specific press printing inclusive of flexographic printing, metal printing, plastic printing, and glass printing, as well as electric printing by printers such as impact printers or non-impact printers in the printing field are known, and the inks used consist mainly of a vehicle, a binder, and a colorant such as a dye or pigment. Further, recently, the development of ultraviolet curing inks for preventing pollution by not using solvents, improving productivity by a rapid curing, or improving the physical properties of the cured coat have been proposed (see, for example, Japanese Unexamined patent publication No. 1-229084, Japanese Unexamined patent publication (Kokai) No. 1-271469, and Japanese Unexamined patent publication (Kokai) No. 2-22370).

Nevertheless, thermal color-changing materials such as the photochromic material and leuco-dye as described above have a poor image stability under visible light. Furthermore, the above-mentioned toners for electrophotographic recording and printing inks have problems in that, after being set, the set image cannot be decolorized, the recording portion cannot be set again, and the recording paper can not be reused, and further, in an accompanying disposal treatment a problem arises in keeping the content of disposed papers secret.

### SUMMARY OF THE INVENTION

An object of the present invention is to provide an electrophotographic toner and printing ink comprising a recording material having sensitivity to light in the near infrared region, to stabilize the recorded portion, capable of decolorizing the set and printed recording material with near infrared rays and of recording on the same portion again, and stable under visible light.

To solve the above problems, investigations were made on a specific near infrared ray-absorbing cationic dye-borate anion complex, and as a result, it was found that a near infrared ray decolorizable recording material, which is decolorized with near infrared rays, can be obtained, and thus the present invention was achieved.

In accordance with the present invention, there are provided a decolorizable electrophotographic toner and a decolorizable printing ink comprising a near infrared ray-decolorizable recording material which comprises a near infrared ray-absorbing cationic dye-borate anion complex having the formula (I): 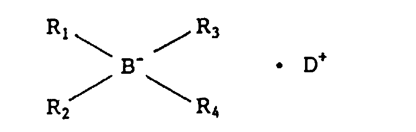 wherein D⁺ represents a cationic dye having absorptions in the near infrared region; R₁, R₂, R₃, and R₄ independently represent an alkyl, aryl, alkaryl, allyl, aralkyl, alkenyl, alkynyl, silyl, alicyclic, or saturated or unsaturated heterocyclic group, substituted alkyl, substituted aryl, substituted alkaryl, substituted allyl, substituted aralkyl, substituted alkenyl, substituted alkynyl, or substituted silyl, with the proviso that at least one of R₁, R₂, R₃, and R₄ represents an alkyl group having 1 to 8 carbon atoms, as a colorant, in which a set portion is decolorized with near infrared rays; and further comprising a sensitizer having the formula (II): 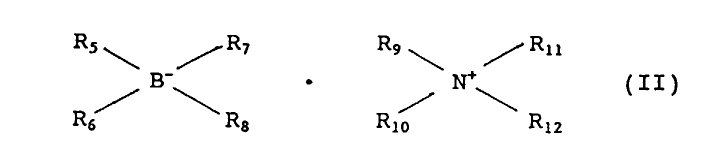 wherein R₅, R₆, R₇, and R₈ independently represent an alkyl, aryl, allyl, alkaryl, aralkyl, alkenyl, alkynyl, silyl, alicyclic, or saturated or unsaturated heterocyclic group, substituted alkyl, substituted aryl, substituted alkaryl, substituted allyl, substituted aralkyl, substituted alkenyl, substituted alkynyl, or substituted silyl, with the proviso that at least one of R₅, R₆, R₇, and R₈ represents an alkyl group having 1 to 8 carbon atoms; and
R₉, R₁₀, R₁₁, and R₁₂ independently represent hydrogen, an alkyl, aryl, alkaryl, allyl, aralkyl, alkenyl, alkynyl, or saturated or unsaturated heterocyclic group, substituted alkyl, substituted aryl, substituted alkaryl, substituted allyl, substituted aralkyl, substituted alkenyl, or substituted alkynyl.

The infrared ray-decolorizable recording material has absorptions in the near infrared region, is decomposed and decolorized by an irradiation of near infrared rays having a wavelength of 700 nm or more, and is stable under visible light.

### DESCRIPTION OF THE PREFERRED EMBODIMENTS

The near infrared ray-decolorizable recording material as used in the present invention can provide a light decolorizable composition sensitive to near infrared rays, which can be decolorized by irradiating light having this wavelength region, by incorporating it into a base material such as a wax or resin.

The specific types of cationic dyes which compose the near infrared ray-absorbing cationic dye-borate anion complex used in the present invention are cyanine, triarylmethane, aminium, and diimonium dyestuffs which have absorptions in the near infrared region. R₁, R₂, R₃, and R₄ in the borate anion independently represent an alkyl, aryl, alkaryl, allyl, aralkyl, alkenyl, alkynyl, silyl, alicyclic, or saturated or unsaturated heterocyclic group, substituted alkyl, substituted aryl, substituted alkaryl, substituted allyl, substituted aralkyl, substituted alkenyl, substituted alkynyl, or substituted silyl, with the proviso that at least one of R₁, R₂, R₃, and R₄ represent an alkyl group having 1 to 8 carbon atoms. Examples of the substituents for the above-mentioned substituted groups are methyl, ethyl, n-propyl, n-butyl, n-hexyl, n-octyl, cyclohexyl, cyclohexenyl, methoxy methyl, methoxyethyl, dimethylaminoethyl, phenyl, anisyl, ethoxy phenyl, methyl phenyl, tert-butyl phenyl, fluorophenyl, chlorophenyl, dimethylaminophenyl, diethylaminophenyl, vinyl, allyl, triphenylsilyl, dimethylphenylsilyl, dibuthylphenylsilyl, trimethylsilyl, piperidyl, thienyl, furyl, pyrrolyl, etc.

Examples of the complexes especially usable in the toner and ink of the present invention are shown in Table 1.

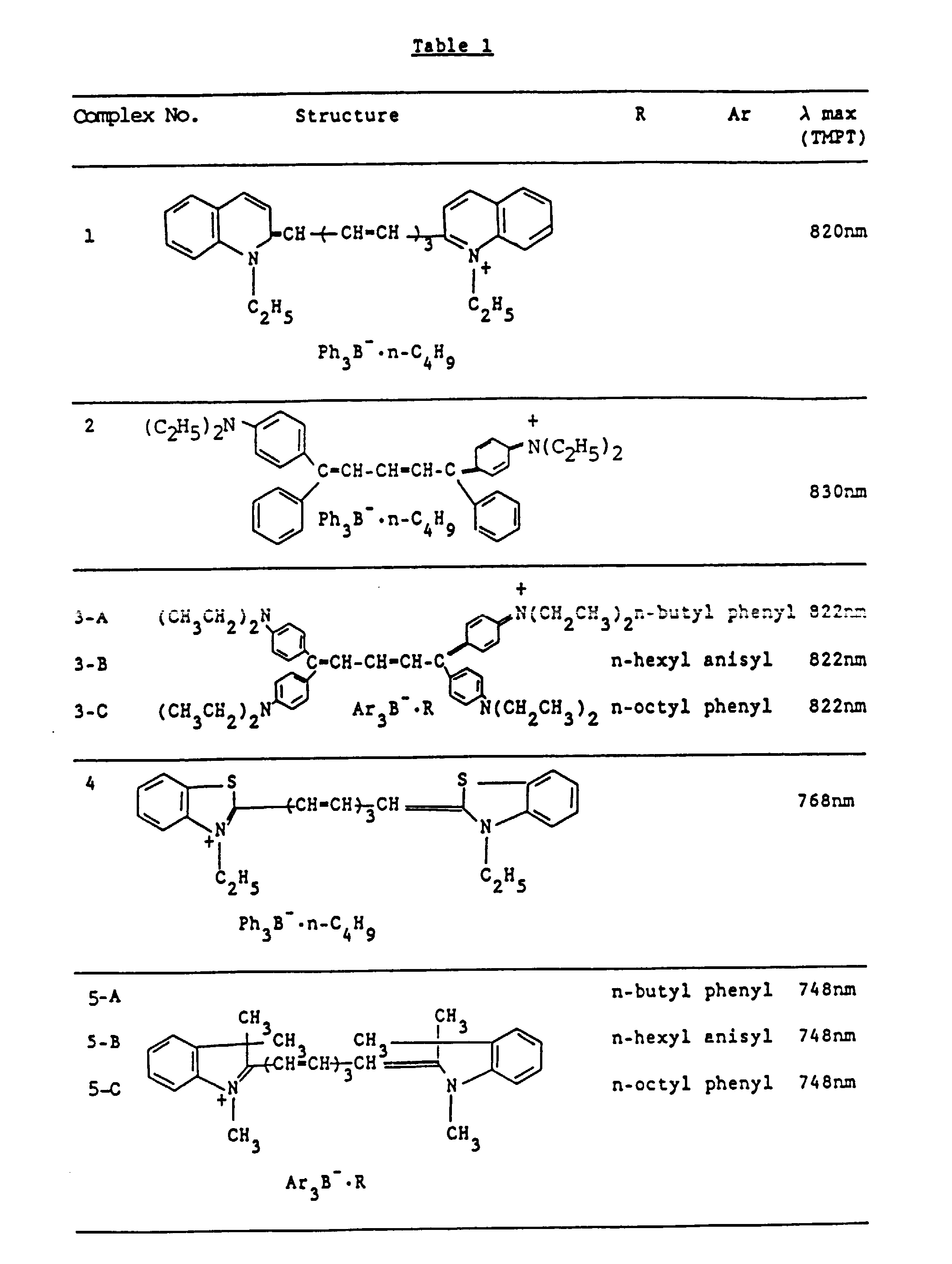

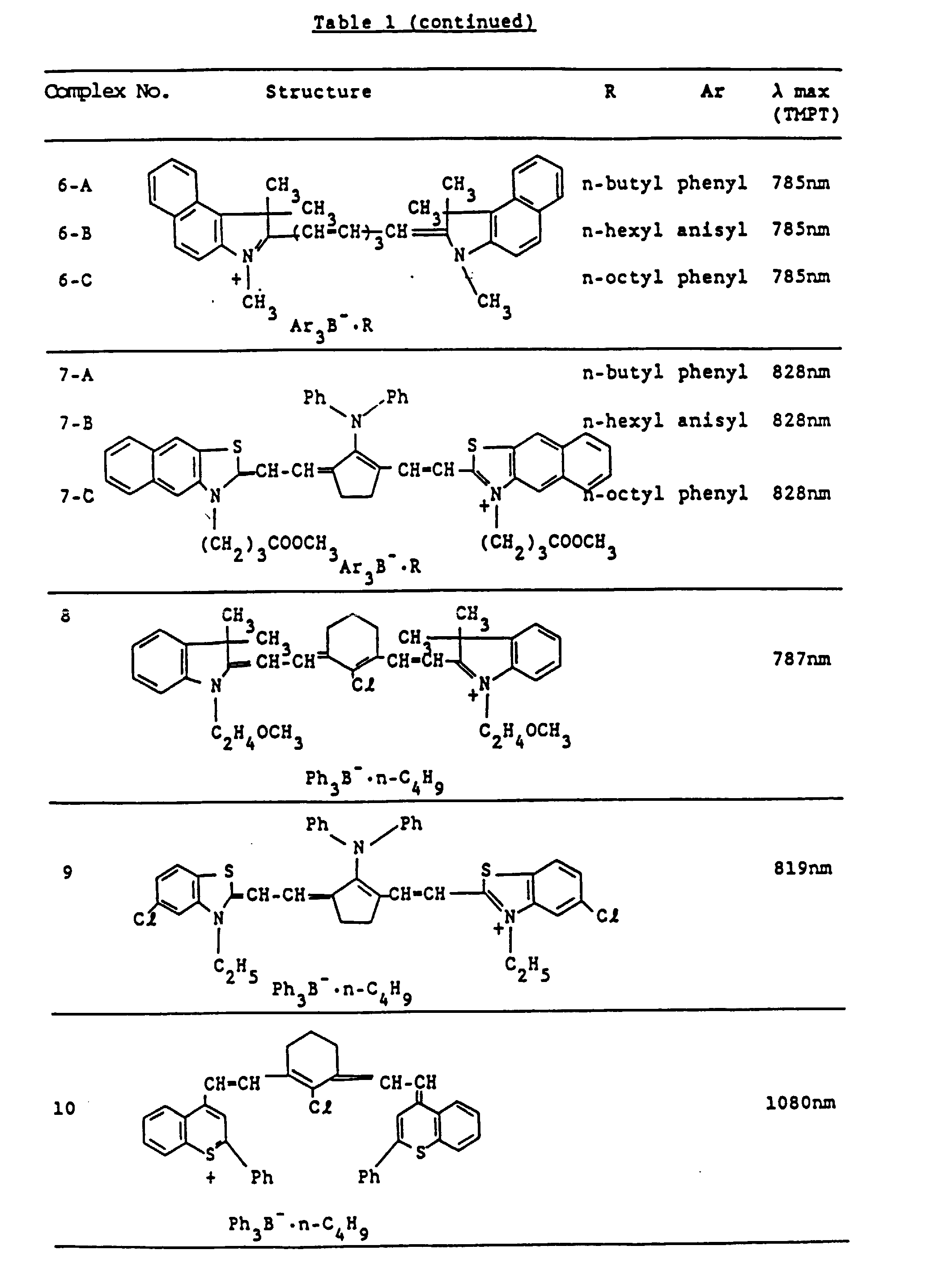

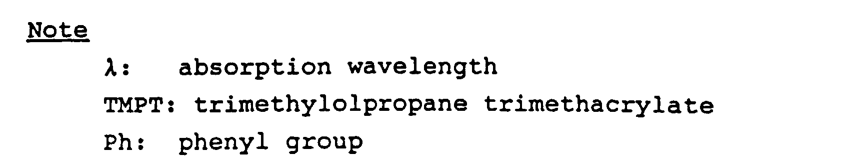

The waxes among the base materials usable in the present invention are those generally used in thermal transferring sheets and inks, including, for example, carnauba wax and Japan wax, which are vegetable waxes: beeswax and wool grease, which are animal waxes; paraffin wax and microcrystalline wax, which are mineral waxes; and polyethylene waxes, PTTE, chlorinated paraffin, and fatty acid amides, which are synthetic waxes. The resins usable in the present invention are all conventional resins, and include, for example, normal temperature drying and curing resins for coating, moisture curing resins for coating, and thermal curing resins for coating, etc., which are capable of brushing, spray coating, dip coating, gravure coating, doctor coating, roll coating, electrostatic coating, powder coating, transferring, and printing, etc. Concrete examples include oil varnish, boiled oil, shellac, cellulose resins, phenol resins, alkyd resins, amino resins, xylene resins, toluene resins, vinyl chloride resins, vinylidene chloride resins, vinyl acetate resins, polystyrene resins, vinyl-butyral resins, acrylic resins, methacrylic resins, diallyl phthalate resins, epoxy resins, urethane resins, polyester resins, polyether resins, aniline resins, furan resins, polyimide resins, silicone resins, and fluoroplastics. Furthermore, the resins may be photo- and electron beam-curing resins, concrete examples including macromonomers, oligomers, and monomers of polyvinyl cinnamate resins, polyvinylbenzal-acetophenone resins, polyvinylstyryl pyridine resins, polyvinyl anthral resins, unsaturated polyester resins, acrylated oils, acrylated alkyd resins, acrylated polyester resins, acrylated polyether resins, acrylated epoxy resins, acrylated polyurethane resins, acrylic resins, acrylated spirane resins, acrylated silicone resins, acrylated fluoroplastics, polythiol resins, and cationically polymerizable epoxy resins. Still further, the base materials may be photo- and chemical-polymerizable monomers and oligomers, and more specifically ethylenically unsaturated compounds. Concrete examples include acrylic or methacrylic esters of monohydric or polyhydric alcohols, and 4-(meth)acryloxyl group-containing aromatic polycarboxylic acids and anhydrides thereof. These can be used alone or as a combination of two or more thereof. Where the monomer is used as the base material, no influence is felt even if the near infrared ray-decolorizable recording material is dissolved in the monomer and the mixture then chemically polymerized or photo-polymerized. The base material used in the present invention is not limited thereto, and all materials are applicable as long as they can be mixed with the near infrared ray-decolorizable recording material by dissolving or dispersing.

The near infrared ray-decolorizable recording material used in the present invention can be formed by dissolving with a solvent or by melting and mixing with the base material in a ratio of 0.01 to 90% by weight, particularly 0.1 to 50% by weight. Note, the near infrared ray-decolorizable recording material used in the present invention can give a desired effect even when the near infrared ray-decolorizable recording material itself is dissolved in a solvent and then coated or set.

The decolorization of the near infrared ray-decolorizable recording material used in the present invention is further promoted by adding a quaternary ammonium-borate complex having the formula (II) as a sensitizer: 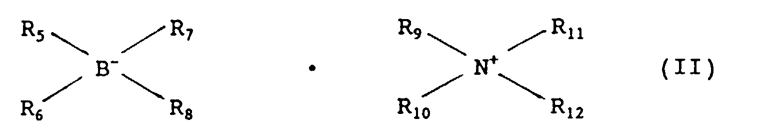 wherein R₅, R₆, R₇, and R₈ independently represent an alkyl, aryl, allyl, alkaryl, aralkyl, alkenyl, alkynyl, silyl, alicyclic, or saturated or unsaturated heterocyclic group, substituted alkyl, substituted aryl, substituted alkaryl, substituted allyl, substituted aralkyl, substituted alkenyl, substituted alkynyl, or substituted silyl, with the proviso that at least one of R₅, R₆, R₇, and R₈ represents an alkyl group having 1 to 8 carbon atoms; and
R₉, R₁₀, R₁₁, and R₁₂ independently represent hydrogen, an alkyl, aryl, alkaryl, allyl, aralkyl, alkenyl, alkynyl, or saturated or unsaturated heterocyclic group, substituted alkyl, substitutied aryl, substituted alkaryl, substituted allyl, substituted aralkyl, substituted alkenyl, or substituted alkynyl. Examples of the substituent groups are methyl, ethyl, n-propyl, n-butyl, n-hexyl, cyclohexyl, cyclohexenyl, methoxymethyl, methoxyethyl, dimethylaminoethyl, phenyl, anisyl, ethoxyphenyl, methylphenyl, tert-butylphenyl, fluorophenyl, chlorophenyl, dimethylaminophenyl, diethylaminophenyl, vinyl, allyl, triphenylsilyl, dimethylphenylsilyl, dibutylphenylsilyl, trimethylsilyl, hydrogen, piperidyl, thienyl, furyl, pyrrolyl, etc.

Typical examples include tetramethylammonium n-butyltriphenyl borate, tetramethylammonium n-butyltrianisyl borate, tetramethylammonium n-octyltriphenyl borate, tetramethylammonium n-octyltrianisyl borate, tetraethylammonium n-butyltriphenyl borate,tetraethylammonium n-butyltrianisyl borate, trimethylhydrogenammonium n-butyltriphenyl borate, triethylhydrogenammonium n-butyltriphenyl borate, tetrahydrogenammonium n-butyltriphenyl borate, tetramethylammonium tetrabutyl borate, tetramethylammonium tetrabutyl borate, tetramethylammonium tri-n-butyl(triphenylsilyl) borate, tetraethylammonium tri-n-butyl (triphenylsilyl) borate, tetrabutylammonium tri-n-butyl(triphenylsilyl) borate, tetramethylammonium tri-n-butyl(dimethylphenylsilyl) borate, tetraethylammonium tri-n-butyl(dimethylphenylsilyl) borate, tetrabutylammonium tri-n-butyl (dimethylphenylsilyl) borate, tetramethylammonium n-octyldiphenyl(di-n-butylphenylsilyl) borate, tetraethylammonium n-octyldiphenyl(di-n-butylphenylsilyl) borate, tetrabutylammonium n-octyldiphenyl(di-n-butylphenylsilyl) borate, tetramethylammonium dimethylphenyl(trimethylsilyl) borate, tetraethylammonium dimethylphenyl(trimethylsilyl) borate, and tetrabutylammonium dimethylphenyl(trimethylsilyl) borate, etc. Furthermore, general dyes and pigments for coloration may be added. In this case, the color of the dye or pigment may remain after the near infrared ray-decolorizable recording material is decolorized by irradiating a near infrared ray.

The near infrared ray-decolorizable recording material used in the present invention can be used alone or as a combination of a plurality of near infrared ray-decolorizable recording materials.

The near infrared ray-decolorizable recording material used in the present invention is mixed with the base material as described above, and set or printed on paper, plastic or metal, after which the set or printed portion can be decolorized by irradiation of near infrared rays by a semiconductor laser, a halogen lamp, or a luminescent semiconductor diode. The decolorized portion can be set or repeatedly printed.

Said near infrared ray-decolorizable recording material is contained in the toner for electrophotographic recording or electrostatic recording or a colorant for a printing ink and an ink for a sublimating or melting transfer printer, and further, can be used for stationery and writing materials such as an ink for a serial printer, an ink for an ink jet printer, a ballpoint pen, a marker, and a magic marker, and a colorant for an UV curing ink.

The concrete uses thereof will now be explained.

The decolorizable toner for the electrophotograph of the present invention is prepared by melting or mixing or dispersing with a solvent, and kneading the near infrared ray-decolorizable recording material, a sensitizer and a electric charge regulator, and if needed, fillers such as titanium white and calcium carbonate as other additives, in a base material such as a binder resin for toner. The storage stability can be further improved when an ultraviolet absorbing agent is added.

Either a positive or negative electric charge regulator hitherto used as a color toner may be used as the electric charge regulator. Examples of positive electric charge regulators are quaternary ammonium salts, alkylamides, hydrophobic silica, etc., and examples of negative electric charge regulators are diaminoanthraquinone, chlorinated polyolefins, chlorinated polyesters, metal salts of naphthenic acid, metal salts of fatty acids, etc.

White fillers such as titanium white, talc, kaolin, silica, alumina, calcium carbonate, aluminum sulfate, barium sulfate, calcium sulfate, titanium oxide, and calcium phosphate can be used as the fillers. The addition of the filler makes it possible to adjust the whiteness after decolorization. The conventional ultraviolet absorbing agent may be used as the ultraviolet absorbing agent.

As the binder resins for the toner of the present invention, thermoplastic resins such as polystyrene resins, acrylic resins, and styrene-(meth)acrylate copolymers are used. Examples of the polystyrene resins include polystyrene homopolymers, hydrogenated polystyrene, styrene-propylene copolymers, styrene-isobutylene copolymers, styrene-butadiene copolymers, styrene-allyl alcohol copolymers, styrene-maleate copolymers, styrene-maleic anhydride copolymers, acrylonitrile-butadiene-styrene terpolymers, acrylonitrile-styrene-acrylate terpolymers, styrene-acrylonitrile copolymers, acrylonitrile-acrylic rubber-styrene terpolymers, acrylonitrile-chlorinated polyethylene-styrene terpolymers, etc. Examples of the acrylic resins include polymethyl methacrylate, ethyl methacrylate, butyl methacrylate, glycidyl methacrylate, fluorine-containing acrylate, methylene methacrylate-butyl methacrylate copolymers, ethyl acrylate-acrylic acid copolymer, etc. Examples of the styrene-(meth)acrylate copolymers include styrene-acrylic acid copolymers, styrene-butadiene-acrylate terpolymers, styrene-methyl methacrylate copolymers, styrene-butyl methacrylate copolymers, styrene-diethylaminoethyl methacrylate copolymers, styrene-methyl methacrylate-butyl acrylate terpolymers, styrene-glycidyl methacrylate copolymers, styrene-butadiene-dimethylaminoethyl methacrylate terpolymers, styrene-acrylate-maleate terpolymers, styrene-butyl acrylate-acrylic acid terpolymers, etc.

To improve the compatibility of the toner binder with the near infrared ray-decolorizable recording material or the quaternary ammonium-borate complex sensitizer, and the decolorization speed, it is possible to use a plasticizer generally used for modifying a resin, or a sensitizer or wax used in a thermal sensitive recording paper. Concrete examples include dibutyl phthalate, dioctyl phthalate, dimethyl terephthalate, diethyl terephthalate, dibutyl terephthalate, dioctyl adipate, dioctyl azelate, trioctyl citrate, tributyl acetylcitrate, dibutyl sebacate, dioctyl sebacate, methyl stearate, ethyl stearate, butyl stearate, methyl esters of hydrogenated rosins, chlorinated paraffin etc.

The near infrared ray-decolorizable recording material, which is a colorant for the decolorizable toner, may be mixed with the above-mentioned toner binder by using a solvent in a ratio of 0.01 to 90% by weight, preferably 0.5 to 20% by weight. The addition of the quaternary ammonium-borate complex sensitizer in an amount of 0.01 to 10% by weight, preferably 0.1 to 5% by weight, based on one percent by weight of the near infrared ray-decolorizable recording material, enhances the decolorization speed.

The electric charge regulator can be added in an amount sufficient-to adjust the electric charge amount of toner to the range of 5 to 30 µc/g., and may be added in an amount of 1 to 10% by weight based on the toner binder.

The filler can be added in an amount of 1 to 20% by weight based on the toner binder, preferably in an amount of 1 to 5% by weight. The ultraviolet absorbing agent may be added in an amount of 1 to 20% by weight, based on the weight of the toner binder.

The processes for preparing the decolorizable toner include a solution process and a melting process. In the solution process, the near infrared ray-decolorizable recording material is dissolved and kneaded in the binder for a toner with an organic solvent, and the quaternary ammonium-borate complex sensitizer, and if required, the electric charge regulator, the ultraviolet absorbing agent, etc. are added, dissolved, and kneaded, and if added, the fillers are dispersed by a paint conditioner, to prepare a mixed resin. After the organic solvent is removed from the mixed resin thus obtained, the toner is prepared by coarsely pulverizing the mixed resin by a hammer mill or a cutter mill, followed by a fine pulverization by a jet mill. In the melting process, the near infrared ray-decolorizable recording material of the present invention is melt kneaded in the toner binder, and if required, the quaternary ammonium-borate complex sensitizer, electric charge regulator, ultraviolet absorbing agent and fillers are melt kneaded to prepare a mixed resin. The resulting mixed resin is pulverized in the same manner as for the solvent process, to prepare a toner. The decolorizable toner obtained as described above can be used not only as a one-component type but also as a two-component type.

After the decolorizable toner is set or printed on paper or an OHP film and then fixed, the set portion can be decolorized by irradiating near infrared rays by using a semiconductor laser, a halogen lamp, or a luminescent semiconductor diode. Furthermore, the decolorized portion can be repeatedly set.

The decolorizable printing ink of the present invention is prepared by mixing and kneading the near infrared ray-decolorizable recording material as a colorant, and the sensitizer with a vehicle for fixing same on the surface to be printed, and as required, is prepared by dispersing and kneading fillers such as titanium white and calcium carbonate as other additives. The storage stability can be further improved when a ultraviolet absorbing agent is added.

The vehicle used in this decolorizable printing ink comprises a drying oil which is relatively rapidly dried when left standing in air, a resin for improving the drying characteristics, gloss, transition characteristics, etc., and a solvent which imparts the required viscosity and fluidity. Also, as necessary, a plasticizer can be added for imparting a pliability and flexibility to a dried coat of the ink.

The drying oils include linseed oil, china wood oil, soybean oil, castor oil, etc.

The resins include natural resins such as rosin and shellac; natural resin derivatives such as cured rosin, rosin esters, maleic acid resins and fumaric acid resins; synthetic resins such as phenol resins, xylene resins, urea-melamine resins, ketone resins, polyvinyl chloride resins, vinyl chloride-vinyl acetate copolymerized resins, butyral resins, styrene-maleic acid resins, chlorinated polypropylene, acrylic resins, polyester resins, alkyd resins, polyamide resins, epoxy resins, polyurethane, and nitrocellulose.

The solvents include aliphatic hydrocarbons such as hexane, heptane and rubber solvents; aromatic hydrocarbons such as toluene and xylene; alcohols such as methyl alcohol, ethyl alcohol, propyl alcohol, isopropyl alcohol, butyl alcohols and cyclohexyl alcohol; glycols such as diethylene glycol, dipropylene glycol, triethylene glycol, polyethylene glycols, propylene glycol, dipropylene glycol and glycerine; glycol derivatives such as ethylene glycol monomethyl ether, ethylene glycol monoethyl ether, ethylene glycol monobutyl ether, diethylene glycol monoethyl ether, diethylene glycol monobutyl ether, ethylene glycol monoethyl ether acetate, ethylene glycol monobutyl ether acetate, diethylene glycol monoethyl ether acetate and diethylene glycol monobutyl ether acetate; esters such as ethyl acetate, isopropyl acetate and butyl acetate; and ketones such as acetone, methyl ethyl ketone, methyl isobutyl ketone and cyclohexanone. As the plasticizers, those mentioned in the above-mentioned decolorizable toner for electrophotographs can be used.

Fillers similar to those of the above-mentioned decolorizable toner for electrophotographs may be used, and conventional ultraviolet absorbing agents may be used as the ultraviolet absorbing agent.

To improve the decolorizing speed, a plasticizer which can be used for modifying a resin, as in the case of the decolorizable toner, or a sensitizer and wax which are used in a thermal recording paper can be used.

The near infrared ray-decolorizable recording material, which is a colorant for the decolorizable printing ink, may be mixed with the above-mentioned vehicle in a ratio of 0.01 to 90% by weight, preferably at a ratio of 0.5 to 20% by weight. The addition of the quaternary ammonium-borate complex sensitizer in an amount of 0.01 to 10% by weight, preferably 0.1 to 5% by weight, based on one percent by weight of the near infrared ray-decolorizable recording material, enhances the decolorization speed. The resin may be mixed so as to meet the requirement of the printing operation.

The fillers also may be added in an amount of 1 to 20% by weight, preferably 1 to 5% by weight. The ultraviolet absorbing agent may be added in an amount of 1 to 20% by weight based on the weight of the drying oil.

This decolorizable printing ink can be prepared by kneading the near infrared ray-decolorizable recording material of the present invention with the drying oil, and if required, adding and kneading the quaternary ammonium-borate complex sensitizer, ultraviolet absorbing agent, fillers, etc.

After being printed by any of various printing processes, such as off-set press printing, letterpress printing, gravure press printing, transfer press printing, or a specific press printing inclusive of flexographic printing, metal printing, plastic printing, and glass printing, as well as electric printing by printers such as an impact printers or non-impact printers, this decolorizable printing ink can be decolorized by irradiating near infrared rays by a semiconductor laser, a halogen lamp, or a luminescent semiconductor diode. Further, the decolorized portion can be repeatedly printed.

As an example of the application of a thermal melt- transfer sheet, a transfer film comprising the near infrared ray-decolorizable recording material kneaded with a paraffin wax as a binder and a xylene resin as a flexibilizer coated on a PET film is brought into close contact with a recording paper, and transferred and printed by a heated head. This set portion can be decolorized by irradiating near infrared rays.

According to the present invention, a decolorizable toner and a decolorizable ink comprising a near infrared ray-decolorizable recording material and a sensitizer, which can be decolorized with near infrared rays after being set and printed, which can be repeatedly printed on the same portion, and which are stable under visible light, are provided.

The present invention will now be described with reference to the following Examples, which in no way limit the scope of the present invention.

### Reference Example 1

20 parts by weight of polymethyl methacrylate were dissolved in 78 parts by weight of methyl ethyl ketone, and the near infrared ray-decolorizable recording material listed in Table 2 was dissolved and mixed therein, in the amount shown in Table 2, to obtain a composition.

### Reference Example 2

20 parts by weight of polymethyl methacrylate were dissolved in 76 parts by weight of methyl ethyl ketone, and the near infrared ray-decolorizable recording material and the sensitizer shown in Table 2 were dissolved and mixed therein, in the amount shown in Table 2, to obtain a composition.

### Reference Example 3

20 parts by weight of polystyrene were dissolved in 75 parts by weight of toluene, and the near infrared ray-decolorizable recording material shown in Table 2 was dissolved and mixed therein, in the amount shown in Table 2, to obtain a composition.

### Reference Example 4

20 parts by weight of polystyrene were dissolved in 70 parts by weight of toluene, and the near infrared ray-decolorizable recording material and the sensitizer shown in Table 2 were dissolved and mixed therein, in the amounts shown in Table 2, to obtain a composition.

### Reference Example 5

20 parts by weight of polymethyl methacrylate were dissolved in 76 parts by weight of methyl ethyl ketone, and near infrared ray-decolorizable recording material shown in Table 2 in the amount shown in Table 2 and 2 parts by weight of SO red 1 (supplied by Orient Kagaku Kogyo) were dissolved and mixed therein, to obtain a composition.

### Reference Example 6

20 parts by weight of polymethyl methacrylate were dissolved in 74 parts by weight of methyl ethyl ketone, and near infrared ray-decolorizable recording material shown in Table 2 in the amount shown in Table 2 and 2 parts by weight of Oil Yellow (supplied by Orient Kagaku Kogyo), were dissolved and mixed therein, to obtain a composition.

### Reference Example 7

In 80 parts by weight of paraffin wax (melting point: 69°C) was thermally melted the near infrared ray-decolorizable recording material shown in Table 2 in the amount shown in Table 2, at 80°C to obtain a composition.

### Reference Example 8

In 70 parts by weight of paraffin wax (melting point: 69°C) were thermally melted the near infrared ray-decolorizable recording material and the sensitizer shown in Table 2 in the amount shown in Table 2, at 80°C to obtain a composition.

### Reference Example 9

In 60 parts by weight of trimethylolpropane triacrylate was dissolved and mixed the near infrared ray-decolorizable recording material shown in Table 2 in the amount shown in Table 2, and 10 parts by weight of methyl o-benzylbenzoate and 5 parts by weight of triethanol amine were added, to obtain a composition.

### Reference Example 10

In 45 parts by weight of trimethylolpropane triacrylate were dissolved and mixed the near infrared ray-decolorizable recording material and the sensitizer shown in Table 2 in the amount shown in Table 2, and further 10 parts by weight of methyl o-benzylbenzoate and 5 parts by weight of triethanol amine were added, to obtain a composition.

### Comparative Example 1 and 2

In 98 parts by weight of hydrogenated polystyrene (softening point: 101°C) was dissolved and kneaded the near infrared ray-decolorizable recording material shown in Table 2 in the amount shown in Table 2 using methylene chloride, after which methylene chloride was removed. The resulting mixed resin was coarsely pulverized with a hammer mill or a cutter mill, and then finely pulverized with a jet mill to prepare a toner.

### Examples 1 to 5

In 96 parts by weight of styrene-butyl methacrylate copolymer (softening point: 72°C) were dissolved and kneaded the near infrared ray-decolorizable recording material and the sensitizer shown in Table 2 in the amount shown in Table 2 using methylene chloride, after which methylene chloride was removed. The resulting mixed resin was coarsely pulverized with a hammer mill or a cutter mill, and then finely pulverized with a jet mill to prepare a toner.

### Examples 6 to 8

In 94 parts by weight of styrene-butyl methacrylate copolymer (softening point: 72°C) were dissolved and kneaded the near infrared ray-decolorizable recording material, the sensitizer and the electric charge regulator shown in Table 2 in the amount shown in Table 2 using methylene chloride, after which methylene chloride was removed The resulting mixed resin was coarsely pulverized with a hammer mill or a cutter mill, and then finely pulverized with a jet mill to prepare a toner.

### Examples 9 to 11

In 89 parts by weight of styrene-butyl methacrylate copolymer (softening point: 72°C) were dissolved and kneaded the near infrared ray-decolorizable recording material, the sensitizer, the electric charge regulator and the plasticizer shown in Table 2 in the amount shown in Table 2 using methylene chloride, after which methylene chloride was removed. The resulting mixed resin was coarsely pulverized with a hammer mill or a cutter mill, and then finely pulverized with a jet mill to prepare a toner.

### Examples 12 and 13

In 94 parts by weight of styrene-butyl methacrylate copolymer (softening point: 72°C) were dissolved and kneaded the near infrared ray-decolorizable recording material, the sensitizer and the electric charge regulator shown in Table 2 in the amount shown in Table 2 using methylene chloride, after which methylene chloride was removed. The resulting mixed resin was coarsely pulverized with a hammer mill or a cutter mill, and then finely pulverized wit a jet mill to prepare a toner.

### Examples 14 and 15

In 91 parts by weight of polymethyl methacrylate (softening point: 78°C) were dissolved and kneaded the near infrared ray-decolorizable recording material, the sensitizer, and the electric charge regulator shown in Table 2 in the amount shown in Table 2 and a methylene chloride dispersion containing 3 parts by weight of titanium white as an additive, after which methylene chloride was removed. The resulting mixed resin was coarsely pulverized with a hammer mill or a cutter mill, and then finely pulverized with a jet mill to prepare a toner.

### Example 16

In 89 parts by weight of polymethyl methacrylate (softening point: 78°C) were dissolved and kneaded the near infrared ray-decolorizable recording material, the sensitizer and the electric charge regulator shown in Table 2 in the amount shown in Table 2 and a methylene chloride dispersion containing 2 parts by weight of a ultraviolet absorbing agent (supplied by Sumitomo Chemical Industries, SUMISORB 400) and 3 parts by weight of titanium white as additives, after which methylene chloride was removed. The resulting mixed resin was coarsely pulverized with a hammer mill or a cutter mill, and then finely pulverized with a jet mill to prepare a toner.

### Comparative Examples 3 and 4

In 60 parts by weight of linseed oil and 30 parts by weight of styrene-maleic acid resin (softening point: 70°C) was dissolved and kneaded the near infrared ray-decolorizable recording material shown in Table 2, in the amount shown in Table 2, to prepare an ink.

### Examples 17 to 21

In 50 parts by weight of linseed oil and 30 parts by weight of styrene maleic acid resin (softening point: 70°C) were dissolved and kneaded the near infrared ray-decolorizable recording material and the sensitizer shown in Table 2, in the amount shown in Table 2, to prepare an ink.

### Examples 22 to 24

In 40 parts by weight of soybean oil and 30 parts by weight of acrylic resin (softening point: 65°C) was kneaded the near infrared ray-decolorizable recording material, the sensitizer, and the solvent shown in Table 2, in the amount shown in Table 2, to prepare an ink.

### Examples 25 to 27

In 40 parts by weight of soybean oil and 25 parts by weight of acrylic resin (softening point: 65°C) were kneaded the near infrared ray-decolorizable recording material, the sensitizer, the solvent and the plasticizer shown in Table 2, in the amount shown in Table 2, to prepare an ink.

### Method to Evaluating Decolorizing Properties

Concerning the compositions of Reference Examples 1 to 6, 0.5 g of these compositions were drawn down on a Carton paper by using an RI tester, to obtain samples. The compositions of Reference Examples 7 and 8 were coated on a polyethyleneterephthalate film having a thickness of 3.5 microns by a wire bar, to attain a membrane thickness of 4 microns. The sheets were transferred and set on a recording paper by a thermal printer at an applied energy of 2.0 mj/dot, to obtain samples. Concerning the compositions of Reference Examples 9 and 10, 0.5 g thereof were drawn down on a Carton paper by using an RI tester, and cured by irradiation of a ultraviolet ray for 1 minute, by an 80 W/cm metal halide lamp at a distance of 8 cm.

The toners obtained in Comparative Examples 1 and 2 and Examples 1 to 16 were further subjected to a surface treatment with a hydrophobic silica and then a carrier was mixed thereto, after which they were set on a PPC paper by a copy machine for PPC (Model LCS-24 supplied from Casio), to obtain samples.

The inks obtained in Comparative Examples 3 and 4 and Examples 17 to 27 were drawn down on a Carton paper in amount of 5 g by using an RI tester, to obtain samples.

By irradiating near infrared rays generated from an aluminum coat type halogen lamp (2W/cm²) on the samples, for one minute, the decolorization was evaluated. The results of the evaluation are shown in Table 3.

### Method of Evaluation of Resistance to Visible light

Samples were made in the same manner as for the method of evaluating the decolorizing properties. The samples were irradiated by a dichroic coat type halogen lamp (2W/cm²) using an infrared cut filter, for 1 hour, to evaluate the decolorization.

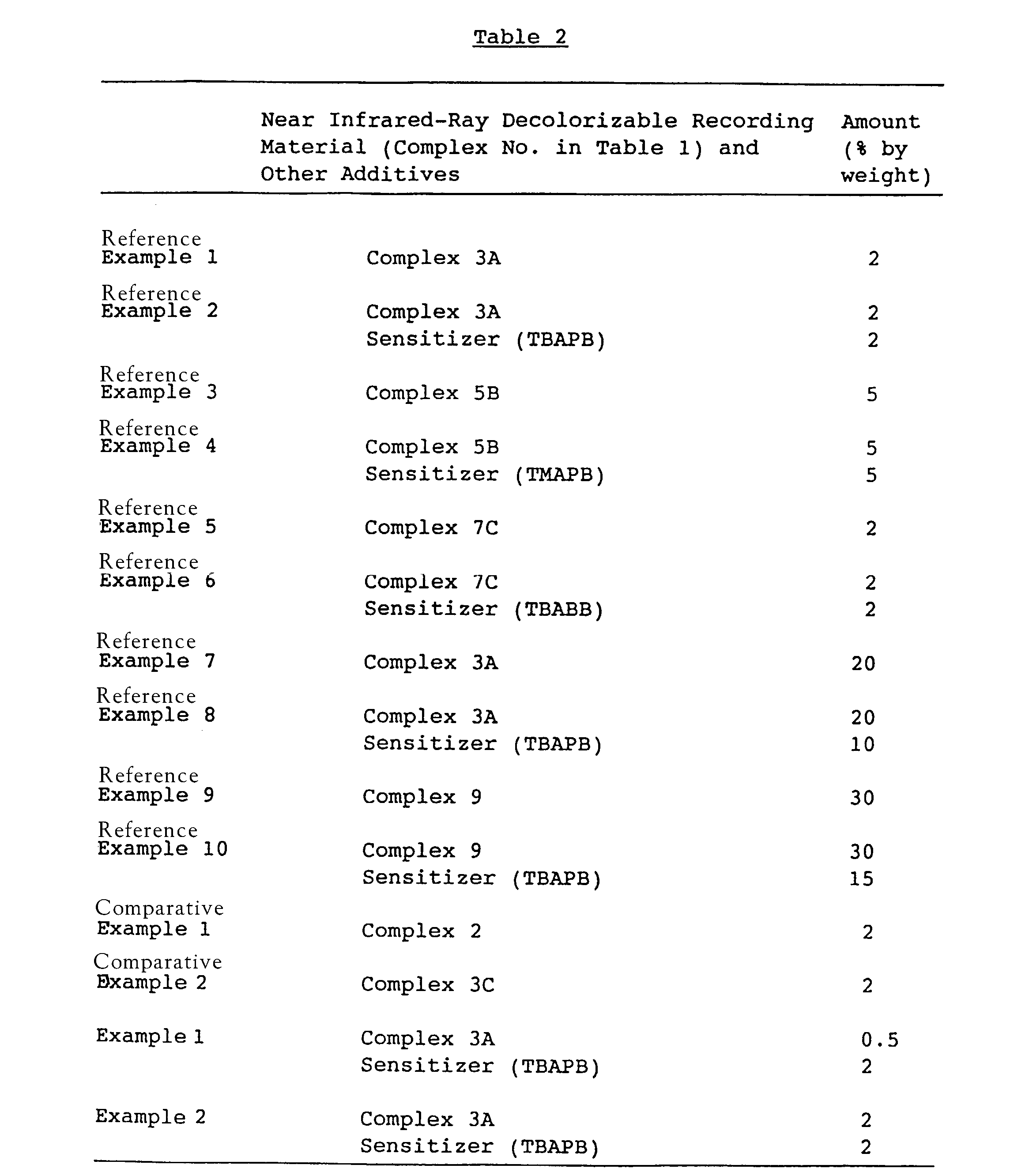

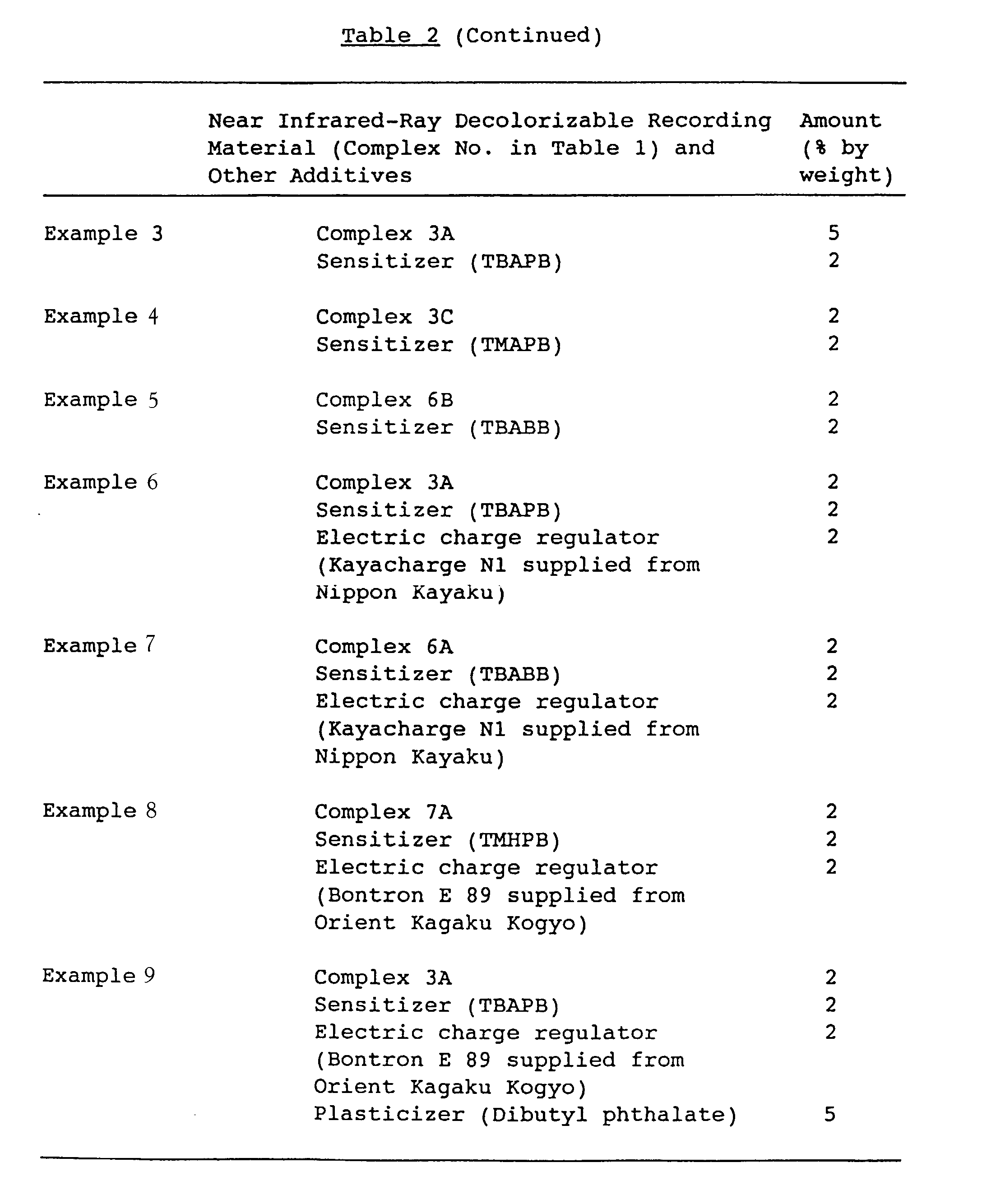

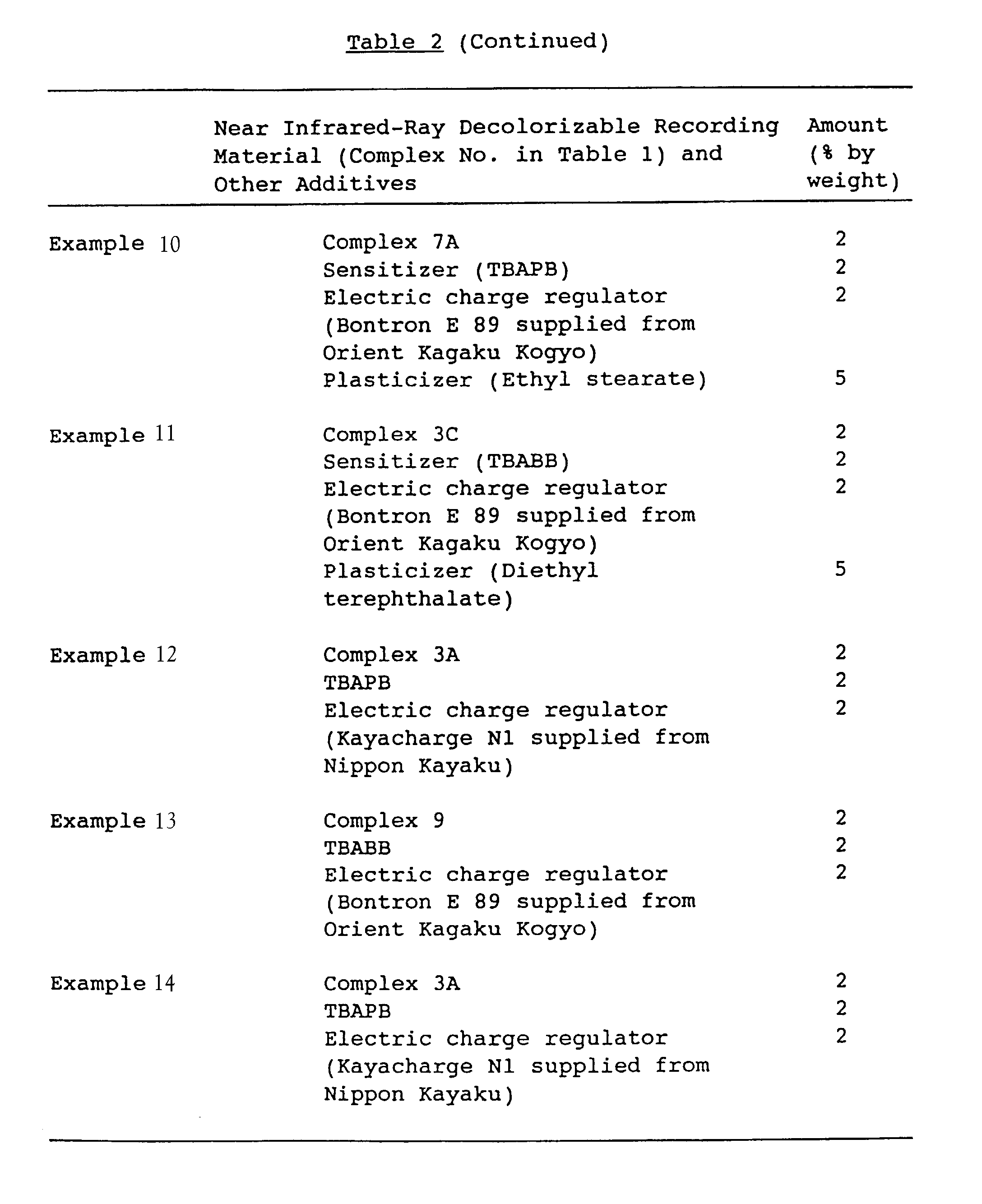

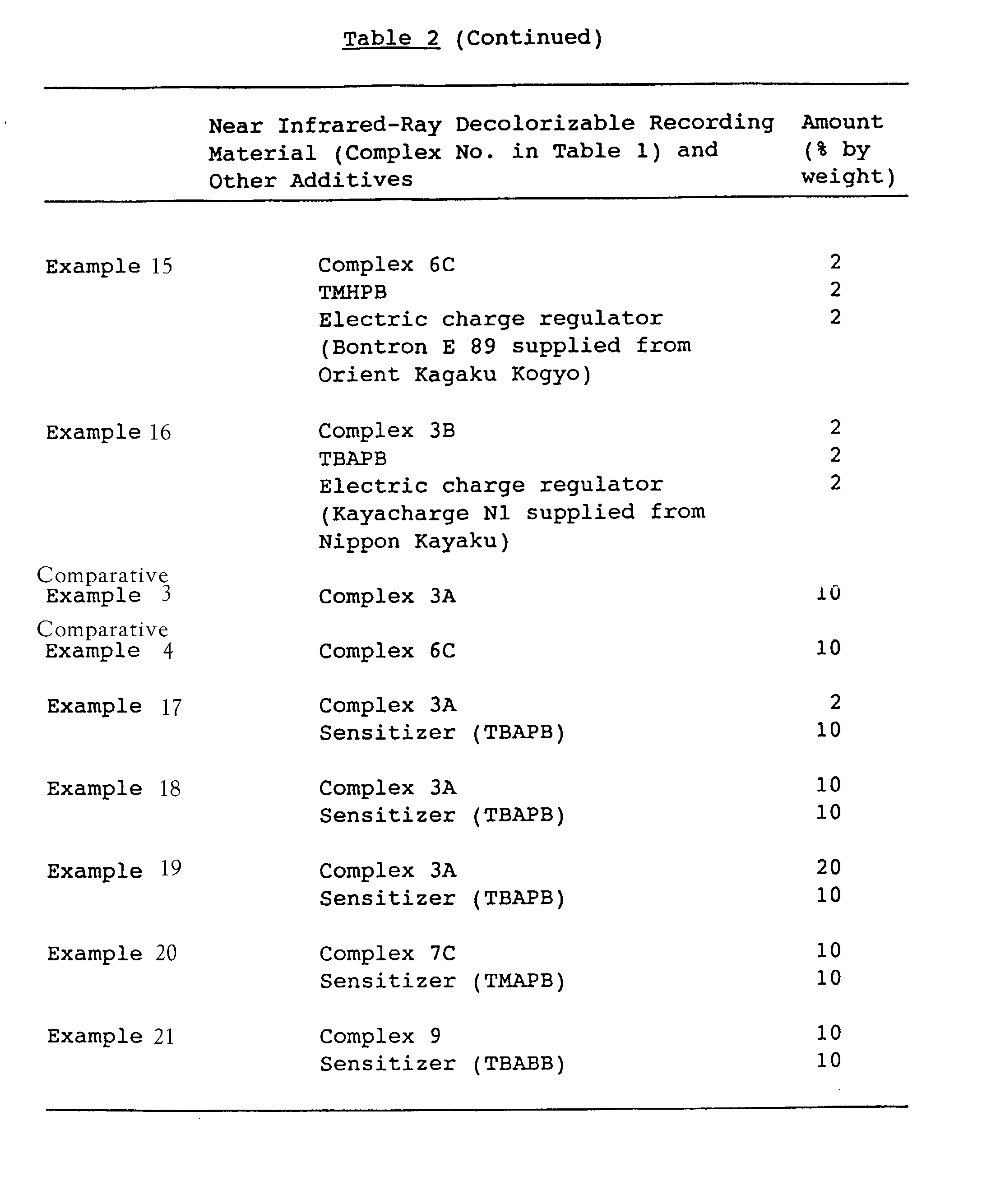

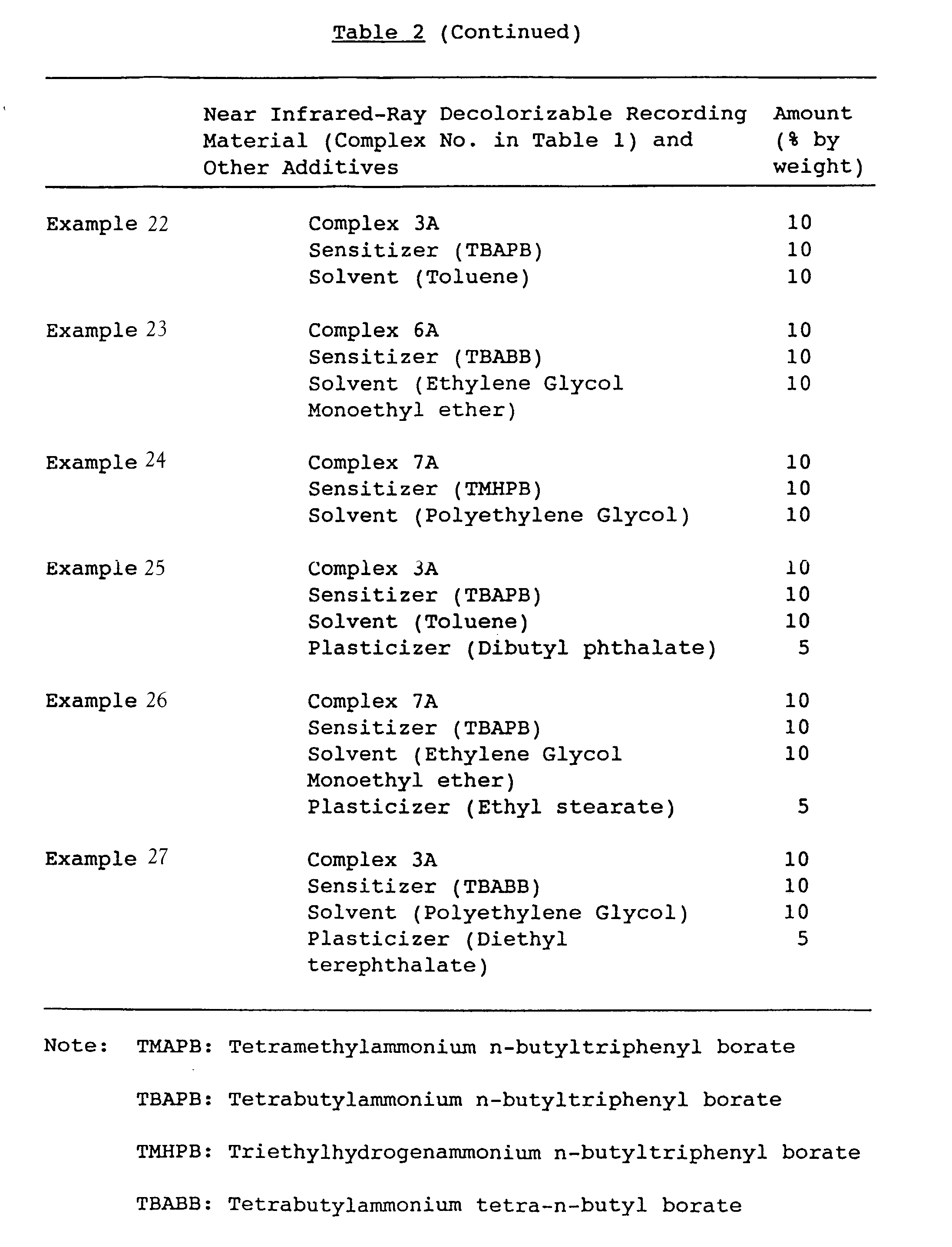

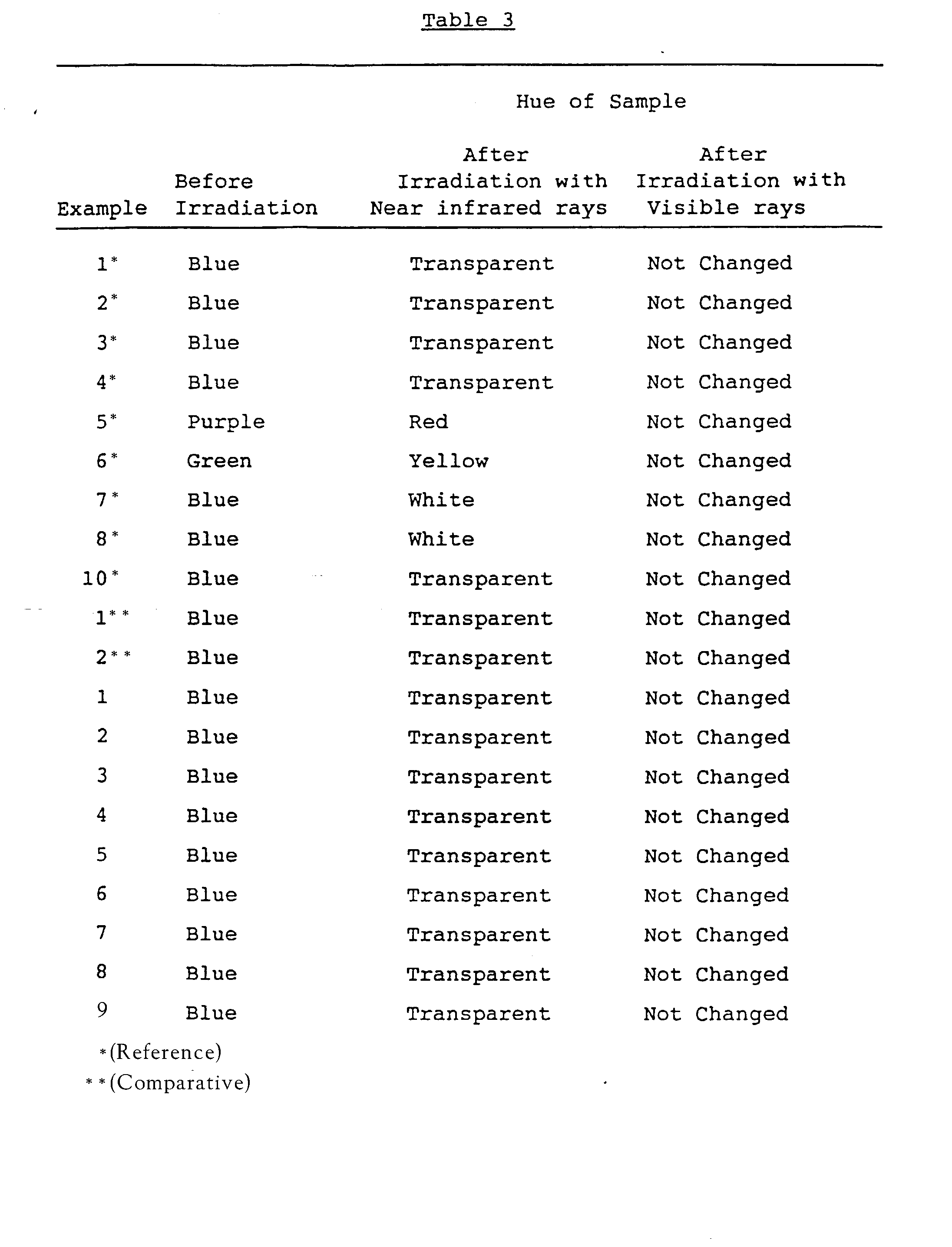

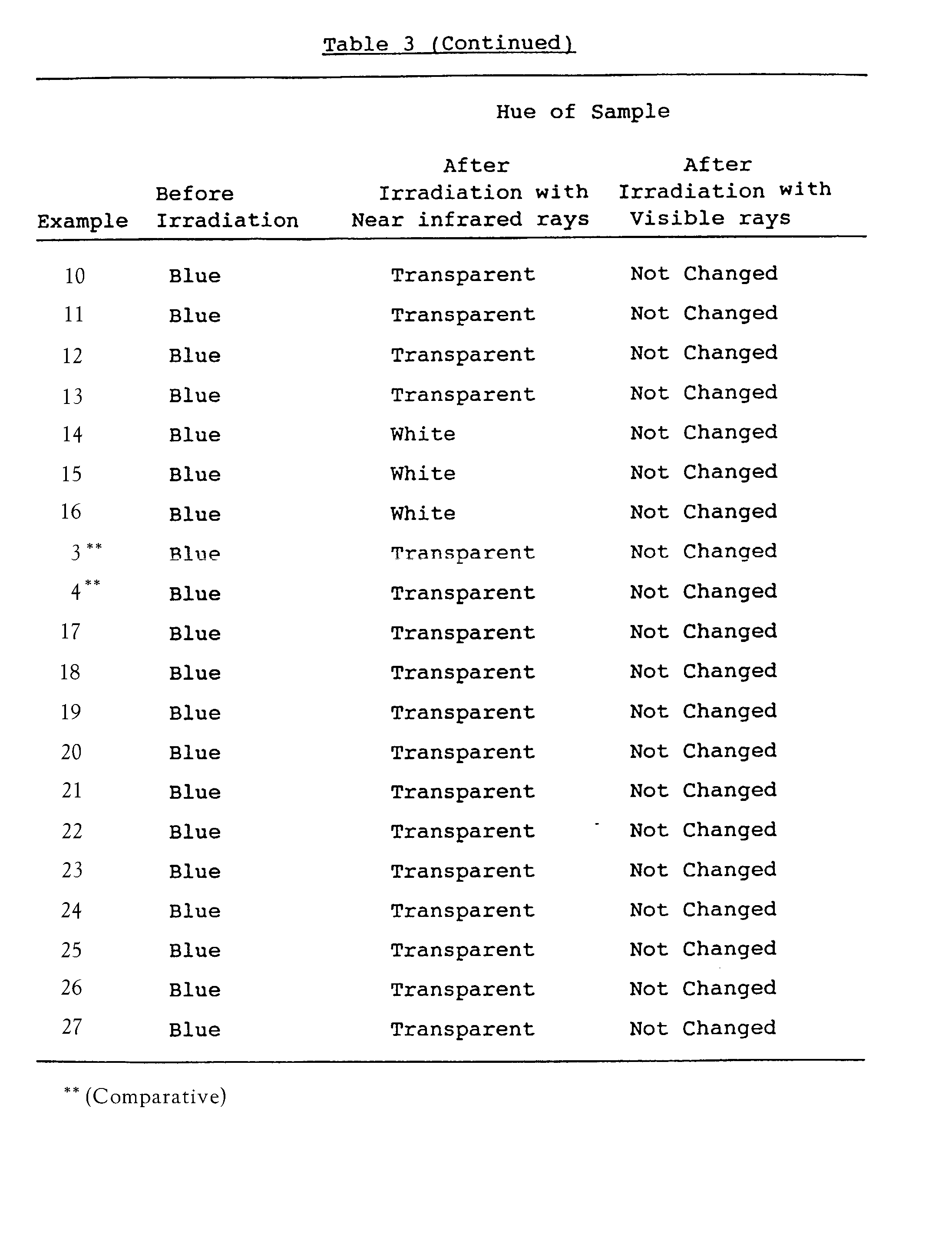

## Claims

1. A near infrared ray-decolorizable electrophotographic toner comprising
a near infrared ray-decolorizable recording material
which comprises a near infrared ray-absorbing cationic dye-borate anion complex having the formula (I): 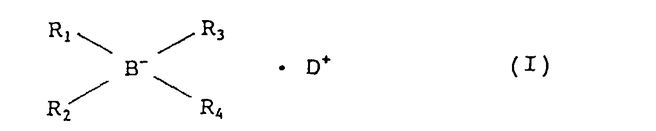 wherein D⁺ represents a cationic dyestuff having absorptions in the near infrared region;
R₁, R₂, R₃, and R₄ independently represent an alkyl, aryl, alkaryl, allyl, aralkyl, alkenyl, alkynyl, silyl, alicyclic, or saturated or unsaturated heterocyclic group, substituted alkyl, substituted aryl, substituted alkaryl, substituted allyl, substituted aralkyl, substituted alkenyl, substituted alkynyl, or substituted silyl, with the proviso that at least one of R₁, R₂, R₃, and R₄ represents an alkyl group having 1 to 8 carbon atoms as a colorant, in which a set portion is decolorized with near infrared rays;
and further comprising
a sensitizer having the formula (II): 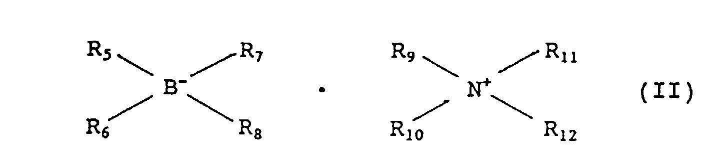 wherein R₅, R₆, R₇, and R₈ independently represent an alkyl, aryl, allyl, alkaryl, aralkyl, alkenyl, alkynyl, silyl, alicyclic, or saturated or unsaturated heterocyclic group, substituted alkyl, substituted aryl, substituted alkaryl, substituted allyl, substituted aralkyl, substituted alkenyl, substituted alkynyl, or substituted silyl, with the proviso that at least one of R₅, R₆, R₇, and R₈ represents an alkyl group having 1 to 8 carbon atoms; and
R₉, R₁₀, R₁₁, and R₁₂ independently represent hydrogen, an alkyl, aryl, alkaryl, allyl, aralkyl, alkenyl, alkynyl, or saturated or unsaturated heterocyclic group, substituted alkyl, substituted aryl, substituted alkaryl, substituted allyl, substituted aralkyl, substituted alkenyl, or substituted alkynyl.

2. A near infrared ray-decolorizable printing ink comprising a near infrared ray-decolorizable recording material as defined in claim 1 as a colorant, in which a set portion is decolorized with near infrared rays, and further comprising a sensitizer as defined in claim 1.

## Patentansprüche

1. Durch Nahinfrarotstrahlung entfärbbarer elektrophotographischer Toner, enthaltend
ein durch Nahinfrarotstrahlung entfärbbares Aufzeichnungsmaterial, das einen Nahinfrarotstrahlung absorbierenden kationischen Farbstoff-Boration-Komplex mit der Formel (I) enthält: 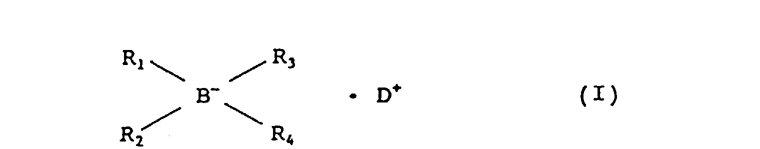 worin D⁺ einen kationischen Farbstoff mit Absorptionen in der Nahinfrarotregion darstellt; R₁, R₂, R₃ und _{R4} unabhängig eine Alkyl-, Aryl-, Alkaryl-, Allyl-, Aralkyl-, Alkenyl-, Alkinyl-, Silyl-, alicyclische oder gesättigte oder ungesättigte heterocyclische Gruppe, eine substituierte Alkyl-, substituierte Aryl-, substituierte Alkaryl-, substituierte Allyl-, substituierte Aralkyl-, substituierte Alkenyl-, substituierte Alkinyl- oder substituierte Silylgruppe darstellen, mit der Maßgabe, daß mindestens einer der Reste R₁, R₂, R₃ und R₄ eine Alkylgruppe mit 1 bis 8 Kohlenstoffatomen darstellt, als ein farbgebendes Mittel, in dem ein abgebundener Anteil durch Nahinfrarotstrahlen entfärbt wird;
und ferner enthaltend
einen Sensibilisator mit der Formel (II): 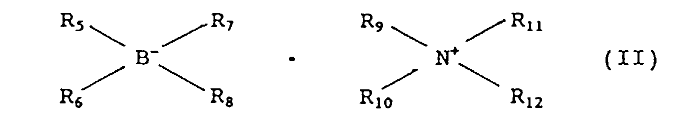 worin R₅, R₆, R₇ und R₈ unabhängig eine Alkyl-, Aryl-, Allyl-, Alkaryl-, Aralkyl-, Alkenyl-, Alkinyl-, Silyl-, alicyclische oder gesättigte oder ungesättigte heterocyclische Gruppe, eine substituierte Alkyl-, substituierte Aryl-, substituierte Alkaryl-, substituierte Allyl-, substituierte Aralkyl-, substituierte Alkenyl-, substituierte Alkinyl- oder substituierte Silylgruppe darstellen, mit der Maßgabe, daß mindestens einer der Reste R₅, R₆, R₇ und R₈ eine Alkylgruppe mit 1 bis 8 Kohlenstoffatomen darstellt; und R₉, R₁₀, R₁₁ und R₁₂ unabhängig Wasserstoff, eine Alkyl-, Aryl-, Alkaryl-, Allyl-, Aralkyl-, Alkenyl-, Alkinyl- oder gesättigte oder ungesättigte heterocyclische Gruppe, eine substituierte Alkyl-, substituierte Aryl-, substituierte Alkaryl-, substituierte Allyl-, substituierte Aralkyl-, substituierte Alkenyl- oder substituierte Alkinylgruppe darstellt.

2. Durch Nahinfrarotstrahlung entfärbbare Druckfarbe, die ein durch Nahinfrarotstrahlung entfärbbares Aufzeichnungsmaterial gemäß der Definition in Anspruch 1 als farbgebendes Mittel enthält, wobei ein abgebundener Anteil durch Nahinfrarotstrahlen entfärbt wird, und die ferner einen Sensibilisator gemäß der Definition in Anspruch 1 enthält.

## Revendications

1. Toner électrophotographique pouvant changer de couleur sous l'effet d'un rayonnement infrarouge proche, comprenant un matériau d'enregistrement pouvant changer de couleur sous l'effet d'un rayonnement infrarouge proche, qui comprend un complexe d'un colorant cationique et d'un anion borate absorbant le rayonnement infrarouge proche, ayant la formule (I) : 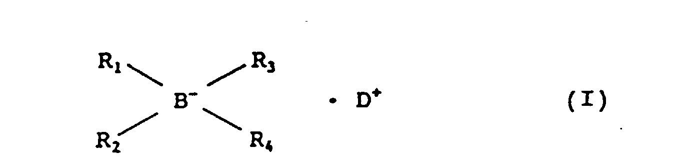 dans laquelle D⁺ représente une matière colorante cationique absorbant dans la région de l'infrarouge proche ; R₁, R₂, R₃ et R₄, indépendamment les uns des autres, représentent chacun un groupe alkyle, aryle, alkaryle, allyle, aralkyle, alcényle, alcynyle, silyle, alicyclique, ou hétérocyclique saturé ou insaturé, un groupe alkyle substitué, aryle substitué, alkaryle substitué, allyle substitué, aralkyle substitué, alcényle substitué, alcynyle substitué ou silyle substitué, du moment qu'au moins un des radicaux R₁, R₂, R₃ et R₄ représente un groupe alkyle ayant de 1 à 8 atomes de carbone,
en tant que colorant, où une portion prédéfinie subit un changement de couleur sous l'effet d'un rayonnement infrarouge proche ;
et comprenant en outre
un sensibilisateur de formule (II) : 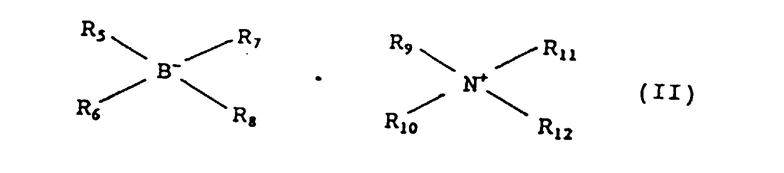 dans laquelle R₅, R₆, R₇ et R₈, indépendamment les uns des autres, représentent chacun un groupe alkyle, aryle, allyle, alkaryle, aralkyle, alcényle, alcynyle, silyle, alicyclique, ou hétérocyclique saturé ou insaturé, un groupe alkyle substitué, aryle substitué, alkaryle substitué, allyle substitué, aralkyle substitué, alcényle substitué, alcynyle substitué ou silyle substitué, du moment qu'au moins l'un des radicaux R₅, R₆, R₇ et R₈ représente un groupe alkyle ayant de 1 à 8 atomes de carbone ; et R₉, R₁₀, R₁₁ et R₁₂ indépendamment les uns des autres, représentent un hydrogène ou un groupe alkyle, aryle, alkaryle, allyle, aralkyle, alcényle, alcynyle, ou un groupe hétérocyclique saturé ou insaturé, un groupe alkyle substitué, aryle substitué, alkaryle substitué, allyle substitué, aralkyle substitué, alcényle substitué, ou alcynyle substitué.

2. Encre d'impression pouvant changer de couleur sous l'effet d'un rayonnement infrarouge proche, comprenant un matériau d'enregistrement pouvant subir un changement de couleur sous l'effet d'un rayonnement infrarouge proche selon la revendication 1, servant de colorant, où une portion prédéfinie subit un changement de couleur sous l'effet de rayons infrarouges proches, et comprenant en outre un sensibilisateur tel que défini dans la revendication 1.
